# EUROPEAN PATENT SPECIFICATION

(11) **EP 0 409 263 B1**
(45) Date of publication and mention of the grant of the patent: **27.09.1995**
(21) Application number: 90113955.0
(22) Date of filing: 20.07.1990
(51) Int. Cl.: H04B 1/08

(54) **Radio apparatus, read/write device and method for reading/writing an identification code in the radio apparatus**
Funkgerät, Lese-/Schreibeinrichtung und Verfahren zum Lesen/Schreiben eines Identifikationskodes im Funkgerät
Appareil de radio, dispositif de lecture/écriture et procédé de lecture/écriture d'un code d'identification dans l'appareil de radio

(30) Priority: 21.07.1989 JP 189379/89; 04.10.1989 JP 117036/89 U; 24.05.1990 JP 134653/90
(43) Date of publication of application: 23.01.1991
(73) Proprietor: SEIKO EPSON CORPORATION, Shinjuku-ku Tokyo-to (JP)
(72) Inventor: Miyazawa, Atsushi, c/o Seiko Epson Corporation, Nagano-ken (JP)
(74) Representative: Hoffmann, Eckart, Dipl.-Ing.

(56) References cited:
- EP-A- 0 276 403
- EP-A- 0 298 720
- GB-A- 2 000 381
- US-A- 4 225 819

## Description

The present invention generally relates to a radio apparatus, i.e. a transmitter, a receiver or a transceiver including identification code means allowing a transmitter to send the identification code to call a receiver which has the same identification code set therein. More particularly the invention relates to such a radio apparatus and to a read/write device and a method for reading/writing such an identification code in the radio apparatus.

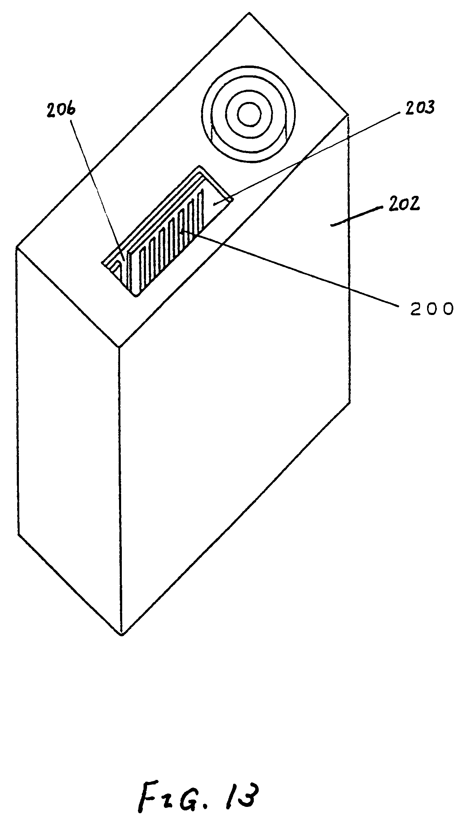

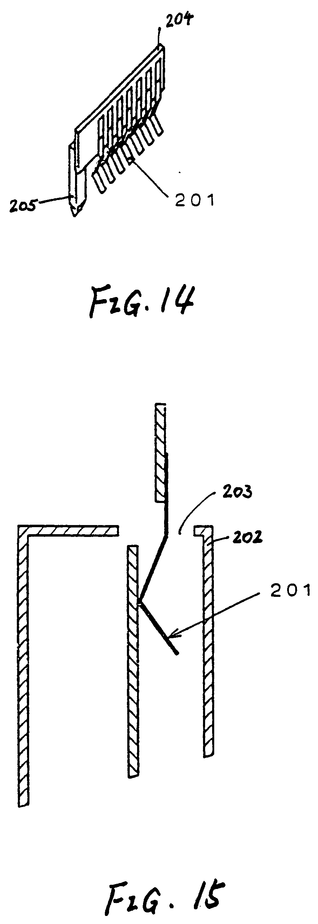

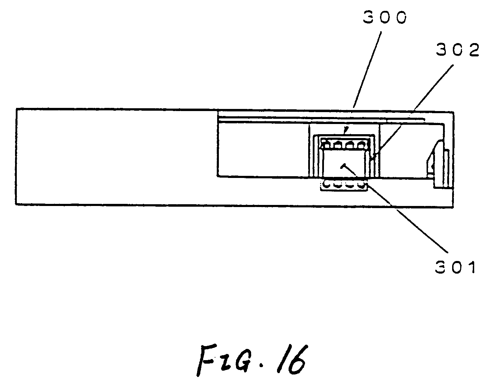

Fig. 13 shows a radio apparatus which is part of a conventional system for reading/writing an identification code therein, and Fig. 14 shows the corresponding conventional code read/write device used for reading/writing an identification code in the apparatus shown in Fig. 13. According to Fig. 13 the apparatus has a casing 202 provided with a terminal compartment accessible via an opening 203 in one side of the casing. The opening 203 is normally closed by a battery cover not shown in the drawing. In the terminal compartment terminals 200 are arranged orthogonally to the plane of the opening 203. According to Fig. 14 the code read/write device comprises a carrier board 204 on which leaf spring read/write terminals 201 and a guide projection 205 are provided. The identification code is determined by the specific combination of an electrical connection or no connection between the read/write terminals 201. As shown in Fig. 15, after the battery cover (not shown) has been removed, the code read/write device of Fig. 14 is inserted through the opening 203 into the terminal compartment so that the leaf spring read/write terminals 201 come into contact with the terminals 200 and the apparatus can detect the specific identification code of the inserted device.

Since in this prior art the terminals 200 are arranged orthogonally to the plane of the opening 203 and are exposed upon removal of the battery cover, a plurality of operations is necessary to make the read/write terminals 201 of the code read/write device accessible. Further, a guide slit 206 must be formed in a circuit board of the apparatus in the vicinity of the terminals 200 for guiding the carrier board 204. This results in a decreased packing density of the circuit board. Also, dust is liable to enter through the *guide slit 206* into the inside of the apparatus. Since additional space for facilitating the access to the code read/write device inserted into the apparatus must be provided, the packaging density of the apparatus is decreased. Where the thickness of the apparatus is limited, there may be insufficient space for the access. The leaf spring read/write terminals have to be accommodated within a narrow space or access section of the apparatus and, therefore, cannot be formed to have sufficient strength. So the identification code read/write device must be handled with great care and the efficiency of working and the durability of the read/write terminals is decreased.

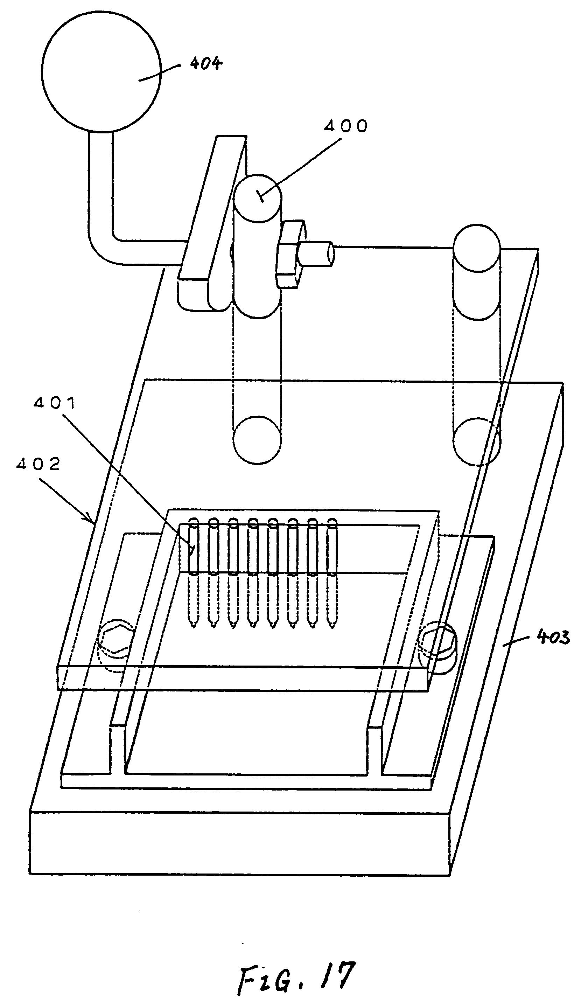

Another prior art is shown in Fig. 16. In this case a PROM 301 is used as an identification code memory. An opening 300 is formed in a battery casing of this apparatus and the PROM 301 is connected through a socket and an auxiliary circuit board 302 to a main circuit board. The PROM is not re-writable and has to be exchanged when the identification code is to be changed. Thus, a socket for the PROM has to be employed to facilitate mounting and demounting of a respective PROM, which is difficult to handle. Fig. 17 shows a conventional function check device having a stage 402 guided by means of slide guides 400 to be vertically movable with respect to a base 403. The stage 402 is provided with downwardly extending read/write terminals 401. The stage is vertically movable by means of a cam assembly coupled to a handle 404. Since in this prior art the stage is moved vertically with respect to the base 403 the base and the slide guides must be rigid. This known device has a large size, a heavy weight, a poor machinability and high production cost.

*A radio apparatus according to the precharacterizing clause of claim 1 is disclosed in EP-A-0 298 720. This prior art is similar to the above explained one in that the terminals to be accessed by the read/write apparatus are provided on a plane perpendicular to the plane of the opening.*

*The document GB-A-2 000 381 discloses an interchangeable module for integrated circuits. The module containing an integrated circuit is adapted to be installed in an electronic apparatus, such as an electronic calculator or a video game. The electronic apparatus has an opening for receiving the module, a cover being provided for retaining the module in place during use. For electrical connection of the integrated circuit in the module to the circuitry of the apparatus, terminals are are provided on a plane parallel to the opening so that they are exposed when the cover is removed and no module inserted.*

*US-A-4,225,819 discloses an apparatus for detecting the presence of contamination films and foreign material on the conducting fingers of a circuit board. The apparatus includes a guide block assembly designed to receive and momentarily hold the circuit board and a rockably mounted arm carrying a plurality of probe assemblies, each having a pair of contacts, such that by turning the arm the probe assemblies* *are simultaneously brought into contact with a respective one of said contact fingers.*

The invention as claimed is intended to remedy the above explained drawbacks. It solves the problem of how to design a radio apparatus having incorporated therein an identification code means in a way that an opening via which terminals are accessible by a separate read/write device can be readily closed in the vicinity of the terminals, dust is substantially prevented from entering the radio apparatus and the apparatus still can have a high packaging density and be made small in size and light in weight.

The invention as claimed further solves the problem of how to design a read/write device capable of reading and writing the identification code in the radio apparatus, having a simple structure of sufficient strength, a high durability of read/write terminals and being of a light weight, small size and inexpensive to manufacture.

Still another object of the present invention is to provide an identification code read/write method by which a read/write device can be readily controlled and connected to a radio apparatus so that an identification code read/write process can be performed without requiring special skill of the operator.

Ways of carrying out the invention are described in detail below with reference to drawings which illustrate only specific embodiments and in which:
- Fig. 1: is a plan view of a receiver forming one embodiment of the radio apparatus according to the present invention,
- Fig. 2: a partial sectional of the receiver shown in Fig. 1,
- Fig. 3: a plan view of an embodiment of the read/write device according to the present invention,
- Fig. 4: a front view of the read/write device of Fig. 3,
- Fig. 5: a right side view of the read/write device of Fig 3,
- Fig. 6: a partial sectional view along the line VI-VI in Fig. 4,
- Fig. 7: a partial sectional view along the line VII-VII in Fig. 3,
- Fig. 8: a partial sectional view along the line VIII-VIII in Fig. 3,
- Fig. 9: a plan view of the detail shown in Fig. 7 with the elements 48, 49 and 50 removed to expose a housing 47,
- Fig. 10: a partial side view of the device showing the arm 32 in different positions,
- Fig. 11: a detail of Fig. 10 at an enlarged scale,
- Fig. 12: a plan view of a receiver forming another embodiment of the radio apparatus according to the invention,
- Fig. 13: a perspective view of a conventional selectively-callable portable radio receiver,
- Fig. 14: perspective view of an identification code setting device to be used with the receiver of Fig. 13,
- Fig. 15: a schematic sectional view to illustrate the cooperation between the receiver of Fig. 13 and the identification code setting device of Fig. 14,
- Fig. 16: a side view of another conventional selectively-callable portable radio receiver and
- Fig. 17: a perspective view showing another conventional read/write device.

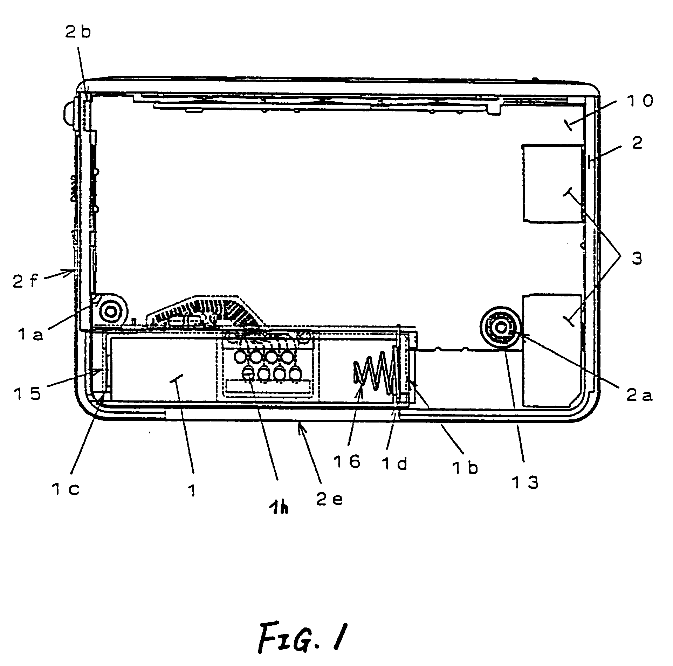

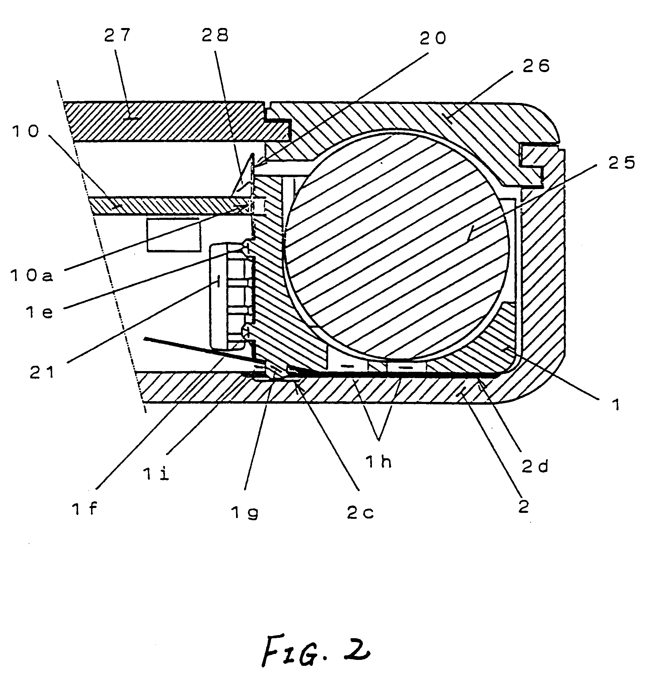

Figs. 1 and 2 show a selectively-callable radio receiver of the portable type as one embodiment of the radio apparatus according to the present invention. The receiver includes a casing made up of a lower or front casing portion 2 and an upper or rear casing portion 27 and a battery cover 26. The front casing portion 2 is U-shaped in section as shown in Fig. 2. In Fig. 1 the battery cover 26, a battery 25, the rear casing portion 27 and screws for fixing the rear casing portion are omitted.

A battery casing 1 is provided in the lower left corner of the front casing portion 2, and an antenna 3 is provided along the right edge of the front casing portion 2, as shown in Fig. 1. A circuit board 10 is arranged in the front casing portion 2 and positioned by means of a guide protrusion 2a formed integrally with the front casing portion 2, and a guide groove 2b formed in the left side wall of the front casing portion 2 as shown in Fig. 1. A spacer 13 is supported by the guide protrusion 2a and serves to keep a certain gap between the circuit board 10 and the rear casing portion 27. 1a is another spacer which is formed integrally with the battery casing 1. 15 is a battery plus terminal to be contacted by the plus pole of the battery 25, and 16 is a battery minus terminal to be contacted by the minus pole of the battery. The battery casing 1 has slits 1b formed in its back face and adjacent side faces and is positioned by engagement of these slits 1b with the rim of a corresponding notch portion of the circuit board 10. The battery casing 1 is formed integrally with a battery plus terminal guide 1c and a battery minus terminal guide 1d for guiding the battery plus terminal 15 and the battery minus terminal 16. The battery casing 1 is virtually supported with respect to the circuit board 10 via the battery plus terminal guide 1c and the battery minus terminal guide 1d by the battery plus terminal 15 and the battery minus terminal 16. The battery casing 1 is reliably secured via the spacer la to the circuit board 10 by screws for fixing the rear casing portion 27, which are not shown.

The cross sectional view of Fig. a shows the battery casing portion of the receiver in more detail. In Fig. 2 20 is another circuit board which is of the flexible type in this embodiment. The circuit board 20 extends from the back side of the battery casing 1 to the bottom thereof. On the back-side of the battery casing 1 the circuit board 20 carries a writable element 21 serving as receiver identification code memory means. In this embodiment the element 21 is an E²PROM of the 8-terminal DIP type. It should be noted that the element 21 need not necessarily be of the 8-terminal type nor of the DIP type. The element 21 is provided on the circuit board 20 midway between the circuit board 10 and the front casing portion 2. 1e and 1f are protrusions formed on the back face of the battery casing 1, which are used to position the circuit board 20 which is provided with two corresponding positioning holes. 1g is a protrusion formed at the lower edge of the battery casing 1, which is used to position the bottom of the battery casing 1 and the circuit board 20. 1h are holes (8 holes in this embodiment) formed in the bottom of the battery casing 1. The holes are arranged in a zig-zag fashion in this embodiment, as shown in Fig. 1, for making the packaging density of write terminals (explained later) high and in turn to reduce the size of a read/write device. Terminals are provided on the portion of the circuit board 20 which is positioned below the bottom of the battery casing 1. Each terminal is registered with one of the holes 1h and connected to a corresponding terminal of the element 21 to allow access to the element 21 by a read/write device which will be explained later. To ensure the reliability of conduction the terminals are gold-plated. It should be noted, that since the holes lh are small in diameter, the terminals can not be touched by a finger during a change of batteries thereby preventing any short-circuiting or the like. Further, since the holes serve as guides for the terminals of the read/write device, any erroneous contact is prevented. Since a read/write operation cannot be performed unless the battery is removed, the battery can be prevented from being charged. 28 are soldering portions between the circuit board 20 and the circuit board 10, which are defined in individual lands.

The circuit board 10 is arranged substantially orthogonally to the back face of the battery casing 1 and has its battery casing guiding notch portion formed such that its rim 10a is spaced a little apart from the circuit board 20. The holes 1h formed in the bottom of the battery casing 1 are arranged substantially in a central portion between the battery plus terminal 15 and the battery minus terminal 16 as shown in Fig. 1. The circuit board 20 is bonded and secured in the vicinity of the protrusion 1g provided at the lower edge of the battery casing 1 and of the holes 1h formed in the bottom. The protrusion 1g is provided at a location corresponding to a flat recess or chamfered portion 1i formed at the lower end of the back face of the battery casing. This protrusion 1g in conjunction with a flat recess 2c formed in the bottom of the front casing portion 2 prevents an otherwise necessary increase of the thickness of the receiver. 2d is a flat recess which is formed in the bottom of the front casing portion 2 for accommodating the circuit board 20. Where the circuit board 20 is arranged as illustrated, a single-sided board can be used which is favorable in terms of costs.

As explained in the foregoing, the receiver has incorporated a writable element serving as identification code memory means. A plurality of terminals provided on a circuit board are arranged substantially parallel to an opening in the casing of the receiver. The terminals are easily accessible by corresponding terminals of a read/write device for writing or changing the identification code stored in the writable element. To that end only the battery cover 26 and the battery 25 have to be removed.

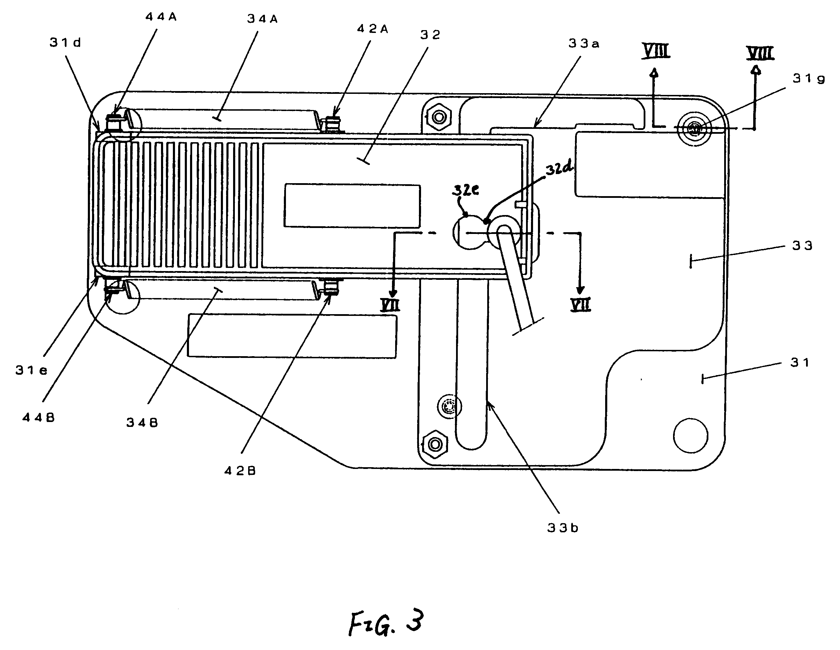

An embodiment of an E²PROM read/write device usable in connection with a radio apparatus of the above described kind will be explained below with reference to Figs. 3 to 11.

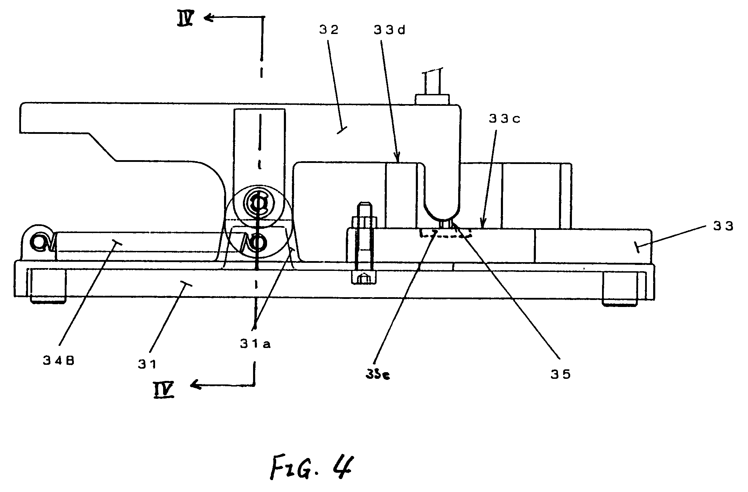

Fig. 3 is a plan view and Fig. 4 a front view of the device. It comprises on a base 31 a pallet 33 serving as a table. An arm 32 is rockably mounted on the base. 33a and 33b are upright walls orthogonal to each other, which are used for positioning the casing of the receiver shown in Fig. 1 on the pallet 33 in a work position. In other words when the receiver is placed on the pallet 33 abutting against both walls 33a and 33b, it is in a position appropriate for read/write processing. 34A and 34B are tensile coil springs urging the arm 32 in a clockwise direction around its centre of rotation.

31a is a protruding portion formed integrally with the base 31 and used for supporting a rotation bearing for the arm 32. 35 are write terminals secured at the distal end of the arm 32. The terminals 35 are urged toward the table face 33c of the pallet 33 by the springs 34A and 34B. 33d is a rotation limiting portion for limiting the rotation of the arm 32, which is provided integrally on the pallet 33.

Fig. 5 is a side view of the device seen from the right hand side in Fig. 3. According to Fig. 5, the write terminals 35 are supported by a holder 36. 37A and 37B are fixing means for securing the holder 36 via a substrate 38 to the arm 32. 37A and 37B are screws in the present embodiment. 33e is a flat recess formed in the table face 33c of the pallet 33 for relief of the right terminals 35. The terminals 35 are made of spring bars so that any vertical positional error with respect to the table face 33c can be absorbed. It is preferable to make the point of the terminals 35 spherical and to plate it with gold to improve the durability and reliability of the reading/writing process.

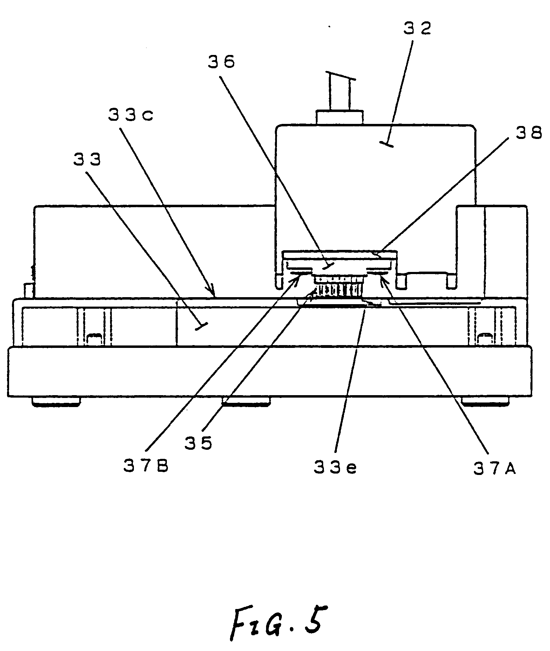

In a partial sectional view Fig. 6 shows the protruding portion 31a for supporting the rotation bearing in detail. 31b and 31c are horizontally aligned holes formed in two opposite walls of the protruding portion 31a which, as shown in Fig. 6, is H-shaped in cross section. A rotary shaft 40 is inserted into the holes 31b and 31c. 32a and 32b are horizontally aligned holes formed at both edges of the arm 32. The arm 32 is rotatably supported via the rotary shaft 40 by the protruding portion 31a. 41A and 41B are retaining members fittable in grooves formed at both ends of the rotary shaft 40, for instance E-shaped retaining rings. 42A and 42B are retaining members for catching hook portions of the springs 34A and 34B. 43A and 43B are E-shaped retaining rings for preventing the retaining members 42A and 42B from coming off the arm 32. It should be noted that retaining members 44A and 44B, shown in Fig. 3, and used for catching hook portions at the opposite ends of the springs 34A and 34B, are made identical with the retaining members 42A and 42B, and that E-shaped retaining rings (not shown) for preventing the retaining members 44A and 44B from coming off protrusions 31d and 31e of the base 31 are made identical with the E-shaped retaining rings 41A, 41B, 43A and 43B shown in Fig. 6. By that, the number of different types of parts is decreased to reduce the cost of the device. 31f is a flat recess formed in a upper portion of the protruding portion 31a provided for making machining easy, decreasing the area of contact of the rotary shaft 40 with the portion 31a and reducing fluctuations of the force necessary for turning the arm 32.

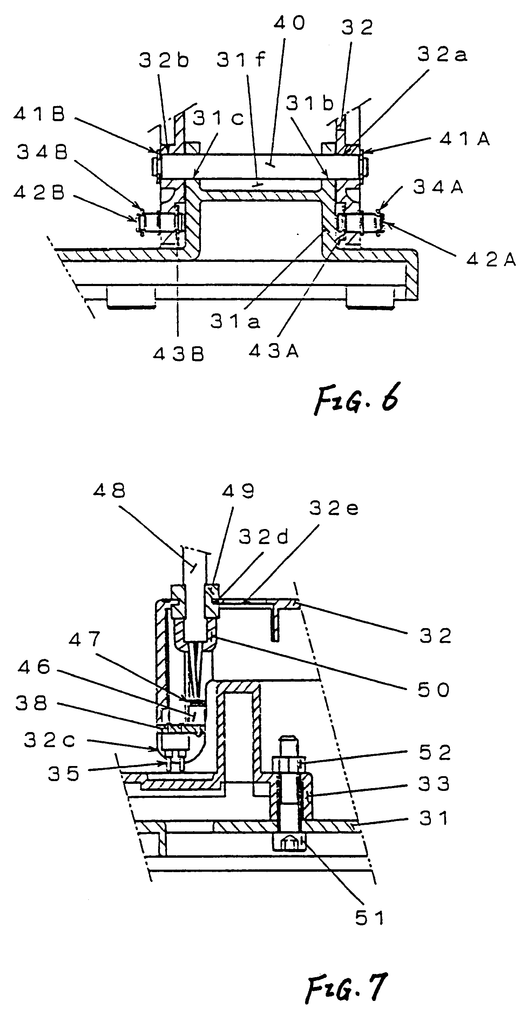

Fig. 7 is a cross sectional view (laterally inverted) along the line VII-VII in Fig. 3 and shows the distal end portion of the arm 32. 32c is a guide portion formed integrally with the arm 32 and being of a shape complementary to that of a battery receiving portion of the battery casing 1 of the receiver shown in Fig. 1. Since the receiver is virtually positioned and guided by the guide portion 32c as it is lowered into the battery casing 1, the receiver is automatically centered on the pallet 33 and any undesirable interference between the terminals 35 and the receiver can be prevented. 46 is a socket which is soldered to board 38 mentioned above. 47 is a housing which is detachably fitted to the socket 46. 48 is a cable which is detachably fitted via a bushing 49 to a slit portion 32d of the arm 32. 50 is a sealing member which is used to prevent the cable 48 from coming off the bushing 49. It preferable to make the bushing 49 from a non-migratable elastic material to prevent the cable 48 and the arm 32 from discoloring and deteriorating. 51 is a hexagon socket head cap screw and 52 a hexagon nut. The diameter of the screw 51 is a bit smaller than that of the corresponding holes in the pallet 33 and the base 31. 32e is a notch portion into which the bushing 49 is first inserted before it is moved laterally into the slit portion 32d. The notch portion 32e has a diameter which is substantially the same as the outer diameter of the bushing 49.

Fig. 8 is a partial cross sectional view (laterally inverted) along the line VIII-VIII in Fig. 3 and shows a guide protrusion portion 31g. 33f is guide protrusion formed integrally with the pallet 33, which is provided to guide the guide protrusion portion 31g. There is a slight gap left between the guide protrusion 33f and the guide protrusion portion 31g so that a certain margin of positional adjustment between the terminals 35 shown in Fig. 4 and the holes 1h of the receiver can be ensured. Two sets of a guide protrusion portion 31g and a guide protrusion 33f are provided at different points so that the pallet 33 can be readily placed on the base 31 with rough positioning.

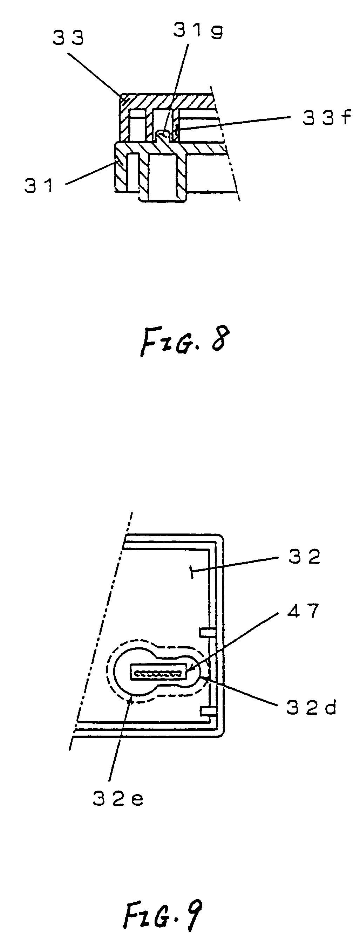

Fig. 9 is a partial plan view on the distal end portion of the arm 32 wherein the cable 48, the bushing 49 and the sealing member 50 are omitted. Fig. 9 shows how the housing 47 is inserted through the slit portion 32d and the notch portion 32e of the arm 32. After the housing 47 has been pushed beyond the slit portion 32d and the notch portion 32e, the bushing 49 is inserted into the notch portion 32e and than fitted into the slit portion 32d. In that state a groove in the bushing 49 is engaged by the rim defining the slit portion 32d so that the thus engaged parts do not separate from each other in a normal condition of use.

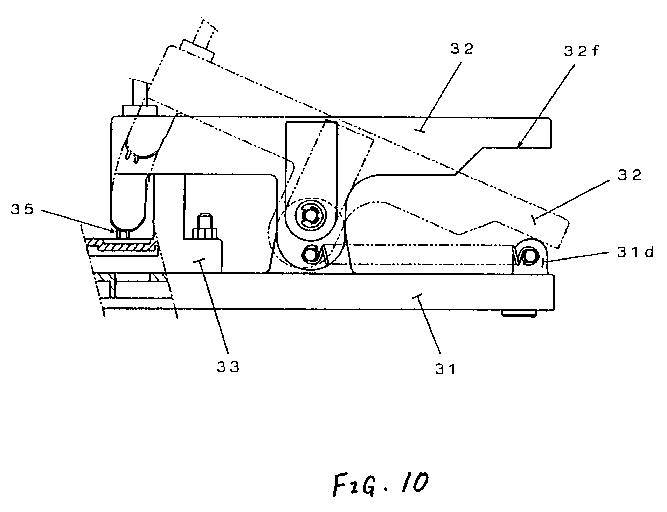

Fig. 10 is a fragmentary side view corresponding to Fig. 3 and showing the arm 32 into different positions. The position shown in solid lines is the normal position into which the arm 32 is biased by the springs 34A and 34B. The position of the arm 32 shown in Fig. 10 by a two-dot chain line (32′) is achieved by depressing the rear end of the arm in order to place the receiver on the pallet 33. A notch 32f is formed at the lower side of the rear end of the arm 32 and cooperates with a protrusion 31d provided integrally on the base 31 to define a rotation limiting means determining the highest position of the terminals 35 and the distal end of the arm 32 above the pallet 33.

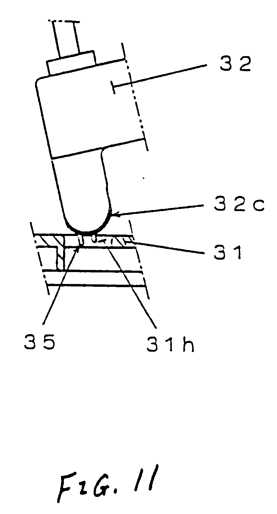

Fig. 11 is a side view of the distal end portion of the arm 32 shown in Fig. 3, in which the pallet 33 is removed and the base 31 located below the terminals 35 is illustrated in cross section. 31h is a flat recess, in this embodiment the form of a through-hole, into which the terminals 35 enter when the pallet 33 is removed and the distal end portion of the arm 32 further lowered due to the springs 34A and 34B. An excessive rotation of the arm 32 is prevented by the guide portion 32c of the arm 32 abutting against the edge of the through-hole 31h. In other words the flat recess or through-hole 31h prevents any load from being imposed on the terminals 35 when the pallet 33 is removed.

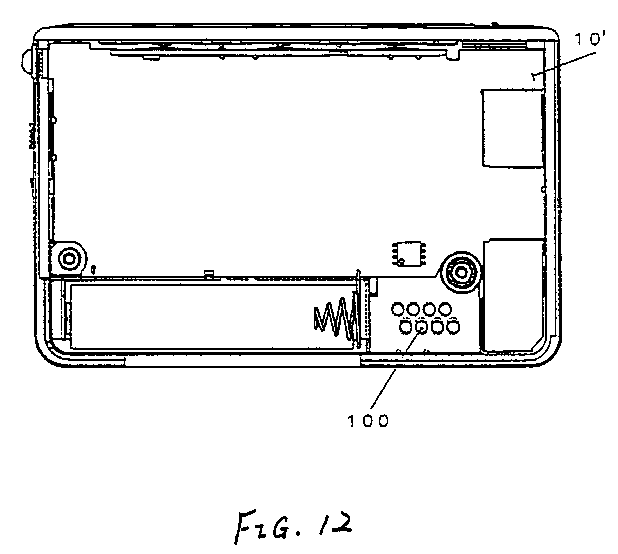

Fig. 12 shows a modification of the receiver of Fig. 1 as a radio apparatus according to the present invention, the view corresponding to that of Fig. 1. Terminals 100 are provided on a circuit board 10′ at a location on one side of the battery casing. A terminal protective cover (not shown) is formed integrally with the battery cover. To prevent short-circuiting during a change of batteries it is preferable to provide a short-circuiting preventive member between the terminals 100 and the battery cover. The embodiment includes such a short-circuiting preventive member formed integrally with the battery casing. The terminals 100 may be provided at any other portion of the circuit board 10′ or on a board-equivalent member. If the terminal protective cover is provided independent of the battery cover, the outer structure of the receiver would be more complicated, the access to the terminals difficult and the receiver more susceptible to static electricity.

An identification code read/write method according to the present invention is as follows. The rear end of the arm 32 of the read/write device is depressed toward the table 33 in order to lift the terminals 35 as shown in Fig. 10. Then the receiver from which the battery cover or terminal protective cover has been removed is placed on the pallet 33 such that the two sides 2e and 2f of the front casing portion 2 comes into contact with the upright walls 33a and 33b, respectively. Then the rear end of the arm 32 is released to press the terminals 35 against the terminals provided on the circuit board of the receiver shown in Fig. 1 with the aid of the urging force exerted by the coil springs 34A and 34B.

As described above, the identification code read/write mechanism according to the present invention has the advantage that access to terminals inside the radio apparatus can be readily attained by inserting the terminals of the read/write device substantially orthogonally through the opening into the radio apparatus having its terminal protective cover removed. Since the terminals provided on the circuit board in the apparatus are arranged substantially parallel to the plane of the opening, they are exposed upon removal of the terminal protective cover so that the opening leading to the inner circuit can be readily closed in the vicinity of the terminals, dust can hardly enter the apparatus and any opening space for access needs not be provided between the terminal protective cover and the terminals on the circuit board. Therefore, the apparatus can be manufactured with a high packaging density, a small size and a light weight.

The identification code read/write device according to the present invention has guide means for guiding the casing of the radio apparatus into a position where the terminals of the read/write device are aligned with the terminals of the radio apparatus. Since the read/write terminals of the read/write device are supported detachably with respect to the terminals provided on the circuit board of the radio apparatus, the read/write terminals can access the terminals provided in the apparatus by only one operation. The access portion of the read/write device can have a sufficient strength without requiring a complicated structure. The durability of the read/write terminals can be made high and, thus, there can be provided read/write devices of simple structure, light weight, small size and low cost.

The identification code read/write method according to the present invention comprises the steps of detaching the read/write terminals of the read/write device from the table, bringing the casing of the radio apparatus into contact with the guide portions of the read/write device and pressing the read/write terminals against the terminals provided on the circuit board of the radio apparatus. Therefore, the read/write device can be readily controlled and the radio apparatus can be set on the read/write device so that the identification code read/write process can be readily performed by any operator.

## Claims

1. A radio apparatus having within a casing (2, 27) a read/writable element (21) serving as identification code memory means, and a plurality of terminals connected to said read/writable element and adapted to be connected to a read/write device, wherein said terminals are arranged to be accessed by said read/write device through an opening formed in the casing (2, 27), the opening being adapted to be closed by a protective cover (26), characterized in that said terminals are arranged on the bottom of a battery casing (1) or on a plane provided on a side of said battery casing, said bottom or plane being substantially parallel to the plane of the opening such that the terminals are exposed upon removal of the protective cover (26), and, in the case, the terminals are arranged on the bottom of the battery casing, that the protective cover is the cover of the battery casing (1) or, in the case, the terminals are aranged on the plane provided on a side of the battery casing, said protective cover is integral with the cover of the battery casing (1).

2. The apparatus according to claim 1, wherein the terminals are provided on a circuit board (20), said circuit board also carrying the read/writable element (21).

3. An identification code read/write device adapted to be used with an apparatus according to claim 1 or 2 and having a guide portion (33a, 33b) for guiding the outer casing of the apparatus in at least two directions in a plane, wherein a plurality of read/write terminals (35) are supported by a rockably mounted arm (32) to be brought into contact with or detached from the terminals of the apparatus by a rocking movement of said arm (32).

4. A method for reading/writing an identification code in the radio apparatus according to claim 1 or 2 by means of the identification code read/write device according to claim 3, comprising the steps of detaching the read/write terminals (35) of the read/write device from a table (33), bringing the outer casing of the radio apparatus into contact with the guide portion (33a, 33b) on the table (33) and pressing the read/write terminals against the terminals in the radio apparatus.

## Patentansprüche

1. Funkgerät mit einem als Kennungscodespeichereinrichtung dienenden les/beschreibbaren Element (21) innerhalb eines Gehäuses (2, 27), und einer Vielzahl von mit dem les-/beschreibbaren Element verbundenen Anschlüssen, die geeignet sind, mit einer Lese/Schreibvorrichtung verbunden zu werden, bei dem die Anschlüsse so angeordnet sind, daß die Lese-/Schreibvorrichtung durch eine in dem Gehäuse (2, 27) gebildete Öffnung auf sie Zugriff nimmt, wobei die Öffnung mittels eines Schutzdeckels (26) verschließbar ist, dadurch gekennzeichnet, daß die Anschlüsse auf dem Boden eines Batteriegehäuses (1) oder auf einer an einer Seite des Batteriegehäuses vorgesehenen Ebene angeordnet sind, wobei der Boden oder die Ebene im wesentlichen parallel zur Ebene der Öffnung ist, so daß die Anschlüsse nach Entfernung des Schutzdeckels (26) bloß liegen, und für den Fall, daß die Anschlüsse auf dem Boden des Batteriegehäuses angeordnet sind, daß der Schutzdeckel der Deckel des Batteriegehäuses (1) ist, oder für den Fall, daß die Anschlüsse auf der an einer Seite des Batteriegehäuses vorgesehenen Ebene angeordnet sind, der Schutzdeckel mit dem Deckel des Batteriegehäuses (1) integral ist.

2. Gerät nach Anspruch 1, bei dem die Anschlüsse auf einer Leiterplatte (20) vorgesehen sind, wobei die Leiterplatte auch das les-/beschreibbare Element (21) trägt.

3. Zur Verwendung mit einem Gerät gemäß Anspruch 1 oder 2 geeignete Kennungscode-Lese-/Schreibvorrichtung, die einen Führungsteil (33a, 33b) zum Führen des Außengehäuses des Geräts in mindestens zwei Richtungen in einer Ebene hat, wobei eine Vielzahl von Lese-/Schreibanschlüssen (35) von einem kippbar angebrachten Arm (32) abgestützt ist, um mit den Anschlüssen des Gerätes durch eine Kippbewegung des Arms (32) in Berührung gebracht oder von ihnen getrennt zu werden.

4. Verfahren zum Lesen/Schreiben eines Kennungscodes in dem Funkgerät gemäß Anspruch 1 oder 2 mittels der Kennungscode-Lese-/Schreibvorrichtung gemäß Anspruch 3, welches die Schritte aufweist, daß die Lese-/Schreibanschlüsse (35) der Lese-/Schreibvorrichtung von einem Tisch (33) gelöst werden, das Außengehäuse des Funkgeräts mit dem Führungsteil (33a, 33b) auf dem Tisch (33) in Berührung gebracht wird und die Lese-/Schreibanschlüsse gegen die Anschlüsse im Funkgerät gedrückt werden.

## Revendications

1. Appareil de radio comportant un boîtier (2, 27), un élément pouvant faire l'objet d'une opération de lecture ou d'écriture (21), remplissant la fonction d'un moyen de mémoire de code d'identification, et un ensemble de bornes connectées à l'élément pouvant faire l'objet d'une opération de lecture ou d'écriture, et conçues pour être connectées à un dispositif de lecture/écriture, dans lequel les bornes précitées sont disposées de façon que le dispositif de lecture/écriture puisse y accéder à travers une ouverture formée dans le boîtier (2, 27), l'ouverture étant adaptée pour être fermée par un couvercle de protection (26), caractérisé en ce que les bornes sont disposées sur le fond d'un boîtier de batterie (1) ou sur un plan qui est établi sur un côté du boîtier de batterie, ce fond ou ce plan étant pratiquement parallèle au plan de l'ouverture, de façon que les bornes soient mises à nu sous l'effet de l'enlèvement du couvercle de protection (26), et en ce que, dans le cas où les bornes sont disposées sur le fond du boîtier de batterie, le couvercle de protection est le couvercle du boîtier de batterie (1), tandis que dans le cas où les bornes sont disposées sur le plan qui est établi sur un côté du boîtier de batterie, le couvercle de protection est formé d'un seul tenant avec le couvercle du boîtier de batterie (1).

2. L'appareil selon la revendication 1, dans lequel les bornes sont formées sur un carte de circuit (20), cette carte de circuit portant également l'élément pouvant faire l'objet d'une opération de lecture ou d'écriture (21).

3. Un dispositif de lecture/écriture de code d'identification, adapté pour être utilisé avec un appareil selon la revendication 1 ou 2, et comportant une partie de guide (33a, 33b) pour guider le boîtier extérieur de l'appareil dans au moins deux directions dans un plan, dans lequel un ensemble de bornes de lecture/écriture (35) sont supportées par un bras (32) monté de façon basculante pour être amenées en contact avec les bornes de l'appareil, ou séparées de ces dernières, par un mouvement de basculement du bras (32).

4. Un procédé de lecture/écriture d'un code d'identification dans l'appareil de radio selon la revendication 1 ou 2, au moyen du dispositif de lecture/écriture de code d'identification selon la revendication 3, comprenant les étapes qui consistent à séparer d'un plateau (33) les bornes de lecture/écriture (35) du dispositif de lecture/écriture, à amener le boîtier extérieur de l'appareil de radio en contact avec la partie de guide (33a, 33b) sur le plateau (33), et à presser les bornes de lecture/écriture contre les bornes dans l'appareil de radio.
